# FASCICULE DE BREVET EUROPEEN

(11) **EP 0 134 743 B1**
(45) Date de publication et mention de la délivrance du brevet: **13.01.1988**
(21) Numéro de dépôt: 84401746.7
(22) Date de dépôt: 31.08.1984
(51) Int. Cl.: C03B 37/025

(54) **Procédé de fabrication d'une fibre optique monomode à maintien de polarisation linéaire**
Verfahren zum Herstellen einer optischen Monomoden Faser mit gradliniger Polarisation
Method of making an optical monomode fibre with linear polarisation

(30) Priorité: 13.09.1983 FR 8314539
(43) Date de publication de la demande: 20.03.1985
(73) Titulaire: THOMSON-CSF, 75008 Paris (FR)
(72) Inventeur: Wehr, Muryel THOMSON-CSF, F-75379 Paris Cedex 08 (FR); Blaison, Serge THOMSON-CSF, F-75379 Paris Cedex 08 (FR); Bourbin, Yannic THOMSON-CSF, F-75379 Paris Cedex 08 (FR)
(74) Mandataire: Lepercque, Jean

(56) Documents cités:
- GB-A- 2 104 239
- US-A- 3 982 916
- US-A- 4 274 854

## Description

La présente invention se rapporte à un procédé de fabrication de fibres optiques monomodes à maintien de polarisation linéaire.

Un procédé de fabrication de fibres optiques est connu sous les abréviations "MCVD" (de l'expression anglo-saxonne: "modified chemical vapor deposition" qui peut se traduire par prodédé modifié de dépôt chimique par voie gazeuse). Ce procédé consiste à faire circuler à l'intérieur d'un tube en quartz ou autre matériau réfringent équivalent un mélange gazeux comprenant notamment de l'oxygène et des composés de silicium, de germanium ou de bore, ces derniers étant introduits à l'intérieur du tube selon des séquences prédetermines. Le tube est chauffé à l'aide d'une source de chaleur que l'on déplace suivant une direction longitudinale à ce tube. Le cycle est recommencé plusieurs fois. A chaque passage dans les zones échauffées, il se réalise une réaction d'oxydoréduction des composants en présence et dépôt des oxydes de silicium, de bore ou de germanium sur la paroi interne. A chaque passage du tube devant la source de chaleur, une nouvelle couche se dépose. La dernière phase du procédé consiste à chauffer très fortement le tube en quartz, il s'ensuit une contraction ou rétreint et on obtient une préforme. Le produit obtenu par ce procédé se présente sous la forme également d'un barreau de diamètre un peu inférieur au diamètre interne du tube en quartz. Cette préforme subit ensuite une phase ultérieure de tréfilage et à l'issue de cette phase, la fibre optique proprement dite est obtenue.

Le brevet américain 4 274 854 deposé le 6 novembre 1979 décrit un tel procédé de fabrication de fibres optiques, et forme la base pour le préambule de la revendication 1.

Ce procédé permet d'obtenir des fibres de très hautes performances notamment des fibres monomodes, utilisées pour la transmission numérique d'information à fort débit ou pour la fabrication de dispositifs optiques tels que des interféromètres en anneau. De telles fibres présentent une faible atténuation (typiquement inférieur à 0,5 dB/km pour une longueur d'onde de 1,3 micromètres) et une grande bande passante (typiquement supérieure à 1 GHz.km).

Parmi les paramètres opto-géométriques associés à ces fibres, un paramètre important est le maintien de la polarisation linéaire d'une onde lumineuse polarisée lors de sa propagation le long de la fibre optique. Un paramètre opto- géométrique associé à la fibre optique, reflétant la qualité du maintien de polarisation, est la "longueur de battement".

Il est connu que les fibres monomodes de structure de symétrie cylindrique propagent deux états de polarisation linéaire orthogonaux "dégénérées". Pour certaines applications telles, par exemple, que l'utilisation de ces fibres optiques dans la réalisation des capteurs ou d'interféromètres en anneau, il est nécessaire de lever cette dégénerescence en créant une différence de vitesse de propagation entre ces deux états de polarisation.

Ceci peut être obtenu en introduisant des effets non homogènes de géométrie ou de contraintes diverses. Habituellement dans l'Art Connu, on recourt à des techniques du type apport de matériau sous forme de barreau, attaque chimique, hydrolyse à la flamme ou usinage de la préforme.

Ces techniques sont difficiles à mettre en oeuvre, nécessitent des manipulations supplémentaires de la préforme et le d'éroulement des étapes du procédé de fabrication s'écarte notablement de celui du procédé classique "MCVD" qui vient d'être rappelé brièvement.

L'invention se fixe pour but de pallier les inconvénients de l'Art Connu et propose un procédé de fabrication de fibres optiques à maintien de polarisation linéaire, simple de mise en oeuvre, non coûteux aussi bien en ce qui concerne l'appareillage, car il ne nécessite pas de modifications importantes des appareillages classiques, qu'en ce qui concerne le procédé lui-même, car il ne nécessite ni démontage et manipulation de la préforme, ni attaque chimique, ni dopage des matériaux en dehors des gammes classiques.

Pour obtenir la conservation de la polarisation linéaire, il est créé, selon le procécé de l'invention, des effets de contraintes non homogènes dans un plan de section orthogonal à l'axe de propagation des ondes guidées, c'est-à-dire à l'axe de symétrie de la région de coeur de la fibre optique. Pour ce faire, on modifie, de façon contrôlée, les géométries respectives des sections de coeur et de gaine optique.

L'inventien a donc pour objet un procédé de fabrication d'une fibre optique monomode à conservation de la polarisation linéaire d'une onde lumineuse guidée par cette fibre optique comprenant:
- uné première étape de dépôt d'oxydes à l'intérieur d'un tube de quartz de section interne elliptique en rotation le long duquel est déplacée une source de chaleur, et dans lequel sont envoyés des halogénures et de l'oxygène pour réaliser un dépôt d'oxydes d'épaisseur plus importante sur la face du tube dans les régions proches du grand axe de l'ellipse de ladite section elliptique que dans les autres régions, le tube étant porté à une première température par cette source de chaleur ; cette étape comportant deux phases, une phase de dépôt de gaine puis une phase de dépôt de coeur;
- une deuxième étape de rétreint du tube obtenue en augmentant la température du tube grâce à la source de chaleur jusqu'à obtenir un barreau ou préforme;
- une troisième étape d'étirage de cette préforme pour obtenir une fibre de dimension homothétique de celles de la préforme comportant une région centrale de coeur entourée d'au moins une région formant gaine de dopages différents;

caractérisé en ce que au moment du rétreint, effectué pendant la deuxième étape, il est créé une surpression à l'intérieur du tube par rapport à la pression ambiante régnant dans le milieu extérieur au tube de manière à obtenir à l'issu de la troisième étape une fibre optique présentant simultanément un coeur de section quasi- circulaire et une gaine de section elliptique.

L'invention sera mieux comprise et d'autres caractéristiques apparaitront au moyen de la description qui suit, en se reportant aux figures qui l'accompagnent, parmi lesquelles:
- les figures 1 à 3 illustrent différents aspects de procédé et dispositif de l'art connu.
- les figures 4 et 5 illustrent des étapes particulières du procédé selon l'invention.
- la figure 6 illustre schématiquement un exemple de réalisation de fibre optique obtenue par le procédé de l'invention.

Il apparait tout d'abord utile de rappeler les principales caractéristiques de la technique "MCVD" mise en oeuvre dans la fabrication des fibres optiques les plus courantes.

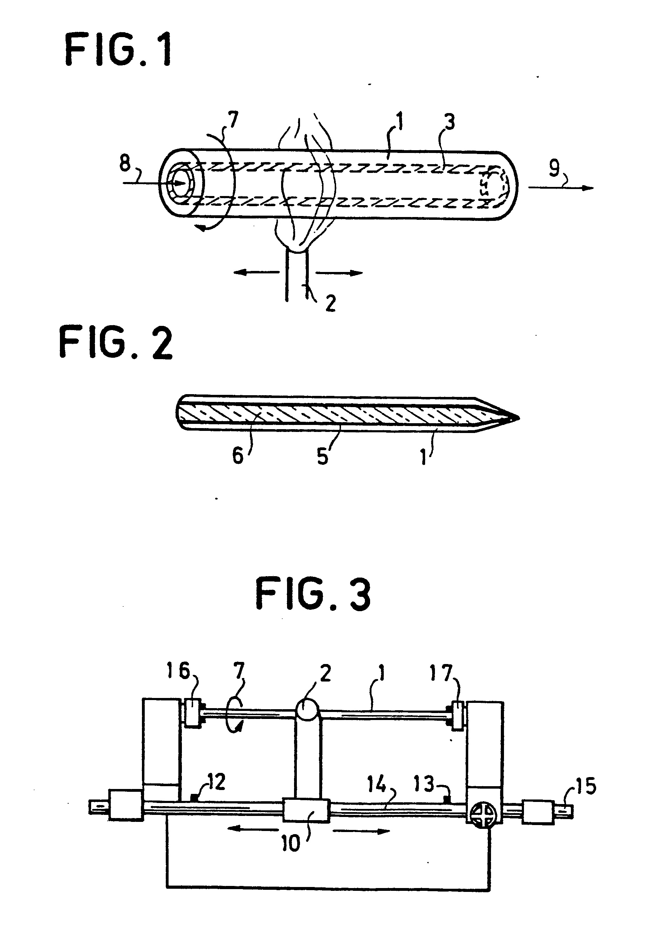

La technique "MCVD" est illustrée schématiquement sur la figure 1. Un tube de quartz 1 est monté entre les deux mandrins d'un tour verrier (non représenté). Le long de ce tube en rotation se déplace la flamme d'un chalumeau oxyhydrogéné à une température suffisante (typiquement 1600°C à 1900° C) pour permettre la réaction des halogénures tels que le tétrachlorure de silicium (SiC1₄) avec de l'oxytrichlorure de phosphore (POCL₃) ou du tetrafluorure de silicium (SiF₄) pour les couches de gaine; et du tétrachlorure de silicium (SiC1₄) et du tétrachlorure de germanium (GeC1₄) pour les couches de coeur, avec de l'oxygène pour donner des oxydes de silicium (Si0₂), de germanium (Ge0₂), de phosphore (P₂0₅) ou de Bore (B₂0₃).

Ces oxydes sont déposés sur la surface intérieure du tube pour former une couche de verre transparente. Les différentes couches sont déposées à chaque passage du chalumeau. L'indice de réfraction est contrôlé en agissant sur la concentration des dopants à chaque passage du chalumeau. Lorsque l'épaisseur du dépôt souhaité est obtenue sur la surface interne du tube, la température du chalumeau est fortement augmentée (typiquement à 2200° C) afin de rétreindre le tube et de le fermer pour donner un barreau que l'on appelle préforme représentée schématiquement sur la figure 2 avec un coeur 6 et une gaine optique 5.

A la place d'un chalumeau, toute autre source de chaleur appropriée peut être utilisées.

La préforme est ensuite étirée dans un four à graphite de haute pureté pour obtenir une fibre qui est enroulée sur un tambour. La longueur de la fibre étant liée aux paramètres géométriques de la préforme et au diamètre extérieur de la fibre désirée, des longueurs de un à plusieurs kilomètres peuvent être obtenues.

Un tour verrier est illustré schématiquement sur la figure 3. Il comprend un plateau 10 support du chalumeau 2 qui peut se déplacer le long d'une vis mère 14, ce déplacement entre deux butées 12 et 13 étant obtenu grâce à un moteur 15.

Le tube de quartz 1 en rotation 7 est maintenu grâce à deux mandrins 16, 17 en rotation.

Le procédé de l'invention comprend l'essentiel des étapes du procédé "MCVD" classique.

Cependant, selon une première caractéristique du procédé de l'invention, le tube 1 de départ est choisi à section elliptique, au moins en ce qui concerne sa section interne.

Ensuite, à chaque passage du chalumeau, une couche de divers matériaux est deposée de façon classique, à l'exception du fait que cette couche n'est plus uniforme. En effet, on dépose une couche d'épaisseur différente suivant les deux axes de l'ellipse.

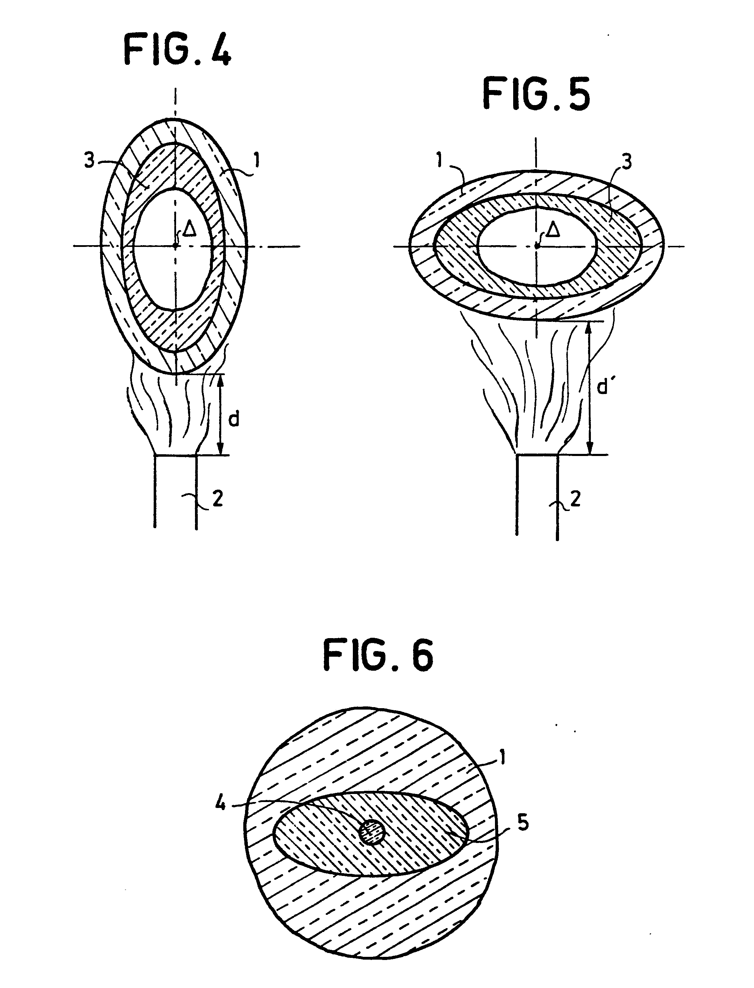

Ceci peut être obtenu facilement du fait que le tube 1, de section elliptique, tourne sur lui-même autour d'un axe de symétrie A. Il s'ensuit que la distance, (figure 4: d et figure 5: d), séparant la paroi externe de la source de chaleur 2 est variable. La température à laquelle est portée la paroi du tube et donc sa face interne est également variable, plus élevée suivant le grand axe de l'ellipse et moins élevée pour le petit axe.

Dans une variante, non représentée, si le tube 1 n'a pas une paroi d'épaisseur homogène comme il a été implicitement admis jusqu'à présent, la température de la face interne de la paroi du tube 1 ne sera pas homogène.

Il s'ensuit que la quantité de matériau déposée à chaque passage dépendant notamment de la température, n'est pes constante. Le dépôt de matériau, sur la face interne de la paroi du tube, dans les régions proches du grand axe de l'ellipse est plus important que dans les autres régions.

Enfin, au moment du rétreint, selon une autre caractéristique du procédé de l'invention, on créé une légère surpression à l'intérieur du tube 1 par rapport à la pression ambiante régnant dans le milieu extérieur du tube 1.

Pour ce faire, on peut insuffler un gaz, de l'oxygène par exemple, à l'intérieur du tube 1. Le débit du gaz détermine la pression. Dans une variante préférée du procédé, on obture tout d'abord une extrémité, par exemple à l'aide de la source de chaleur (par fusion), ce qui permet de contrôler avec plus de précision la pressiom. A titre d'exemple la surpression est de l'ordre de 100Pa, ce qui correspond à un débit d'oxygène 1,5 litre par heure.

Par ce biais, on évite un écrasement de la région qui va devenir le coeur de la fibre, région qui acquièrt de ce fait une section circulaire ou quasi-circulaire alors que la région de gaine qui l'entoure va conserver une section elliptique homothétique de la section elliptique du tube de départ.

La figure 6 illustre schématiquement la section d'une fibre optique obtenue par le procédé de l'invention. La section extérieure de la fibre optique reste naturellement légèrement elliptique, mais cet aspect est sans importance dans le cadre de l'invention.

Pour fixer les idées, dans un exemple de réalisation d'une telle fibre, en partant d'un tube de section elliptique, de grand axe 30 mm et de petit axe 20 mm, et d'épaisseur de paroi égale à 2 mm, on a obtenu une fibre optique dont le coeur 4 était quasi-circulaire et dont la gaine 5 était fortement aplatie, l'ellipticité de la gaine étant égale à 0,65.

Le coeur est réalisé à base de silice (Si0₂) dopée à l'oxyde de germanium (Ge0₂) tel que la concentration (Ge0_{2/}Si0₂) soit supérieure à 0,30.

Pour des longueurs d'ondes lumineuses guidées inférieures à 0,84 micromètres on utilise des oxydes de bore comme élément dopant des matériaux constituant la gaine et de germanium pour les matériaux constituant le coeur.

Pour des longueurs d'onde supérieures par exemple dans l'infra-rouge, on dope les matériaux constituant la gaine avec un mélange d'oxydes de fluor et de phosphore. On peut encore conserver un dopege des matériaux constituant la gaine à base d'oxyde de bore et on créé une région intermédiaire ou gaine optique, près du coeur, dopée à base d'oxydes de fluor et de phosphore.

Les différences d'indices de réfraction entre la gaine 5 et le tube externe 1, d'une part, et le coeur4 et la gaine 5, d'autre part, étaient respectivement 610-3 et 10-2.

On a mesuré une longueur de battement égale à 5 mm pour une longueur d'onde égale à 0,63 micromètres.

Comme il a été rappelé, le procédé présente l'avantage d'être simple de mise en oeuvre et non coûteux car il permet d'utiliser sans modifications importantes les appareillages existants et s'écarte peu des étapes des procédés de l'Art Connu, en particulier du procédé "MCVD".

En outre, il ne nécessite ni démontage ni manipulation particulière de la préforme, ce qui pourrait entrainer un risque de pollution.

La nature des gaz utilisés et les gammes de dopages ne diffèrent pas de l'Art Connu.

Enfin, l'expérience l'a montré, ce procédé permet la fabrication de fibres optiques à faible longueur de battement et à faible atténuation.

## Revendications

1. Procédé de fabrication d'une fibre optique monomode à conservation de la polarisation linéaire d'une onde lumineuse guidée par cette fibre optique comprenant:
- une première étape de dépôt d'oxydés à l'intérieur d'un tube de quartz (1) de section interne elliptique en rotation le long duquel est déplacée une source de chaleur (2), et dans lequel sont envoyés des halogénures et de l'oxygène pour réaliser un dépôt d'oxydes d'épaisseur plus importante sur la face du tube (1) dans les régions proches du grand axe de l'ellipse de ladite section elliptique que dans les autres régions, le tube étant porté à une première température par cette source de chaleur ; cette étape comportant deux phases, une phase de dépôt de gaine puis une phase de dépôt de coeur;
- une deuxième étape de rétreint du tube (1) obtenue en augmentant la température du tube (1) grâce à la source de chaleur (2) jusqu'à obtenir un barreau ou préforme;
- une troisième étape d'étirage de cette préforme pour obtenir une fibre de dimension homothétique de celles de la préforme comportant une région centrale de coeur (6) entourée d'au moins une région formant gaine (5) de dopages différents;
caractérisé en ce que au moment du rétreint, effectué pendant la deuxième étape, il est créé une surpression à l'intérieur du tube (1) par rapport à la pression ambiante régnant dans le milieu extérieur au tube (1) de manière à obtenir a l'issu de la troisième étape une fibre optique présentant simultanément un coeur (4) de section quasicirculaire et une gaine (5) de section elliptique.

2. Procédé selon la revendication 1, caractérisé en ce que la supression est réalisé en introduisant à l'intérieur du tube un gaz et en contrôlant le débit de ce gaz pour régler l'amplitude de la supression.

3. Procédé selon la revendication 2, caractérisé en ce que le gaz est de l'oxygène.

4. Procédé selon l'une quelconque des revendications 2 à 3, caractérisé en ce qu'il comprend une étape supplémentaire avant rétreint au cours de laquelle l'une des extrémités du tube (1) est obturée, le gaz étant l'introduit par l'autre extrémité.

5. Procédé selon l'une quelconque des revendications 1 à 4 caractérisé en ce que la supression est égale à 100Pa.

6. Procédé selon la revendication 5 caractérisé en ce que les variations d'épaisseurs du dépôt d'oxyde sont obtenues en portant les régions de la face interne de la paroi du tube (1) à des températures différentes, les régions proches du grand axe de l'ellipse étant portées à une température supérieure à celle des autres régions.

## Patentansprüche

1. Verfahren zur Herstellung einer Monomode-Lichtleitfaser, in der die lineare Polarisation einer in dieser Faser geführten Lichtwelle erhalten bleibt, wobei
-in einem ersten Verfahrensschritt Oxide im Inneren eines rotierenden Quarzrohrs (1) mit elliptischem Innenquerschnitt aufgebracht werden, an dem entlang eine Wärmequelle (2) verschoben wird und das mit Halogeniden und mit Sauerstoff beschickt wird, zur Erzeugung einer dickeren Oxidschicht auf der Rohrfläche in den der großen Ellipsenachse des elliptischen Querschnitts nahen Bereichen als in den übrigen Bereichen, wobei das Rohr durch diese Wärmequelle auf eine erste Temperatur gebracht wird und dieser Verfahrensschritt aus zwei Phasen besteht, nämlich einer Phase, in der das Hüllenmaterial aufgebracht wird, und einer Phase, in der das Kernmaterial aufgebracht wird,
-in einem zweiten Verfahrensschritt das Rohr (1) einer Schrumpfung mithilfe der Wärmequelle (2) unterworfen wird, bis sich ein Stab oder Rohling ergibt,
-in einem dritten Verfahrensschritt der Rohling gezogen wird, um eine Faser zu erhalten, deren Abmessungen denen des Rohlings verhältnisgleich sind, mit einem zentralen Kernbereich (6) und mindestens einem diesen umgebenden Hüllenbereich (5) unterschiedlicher Dotierungen,
dadurch gekennzeichnet, daß während des Schrumpfens im zweiten Verfahrensschritt im Inneren des Rohrs (1) ein Überdruck im Verhältnis zum außerhalb des Rohrs (1) herrschenden Druck erzeugt wird, sodaß sich nach dem dritten Verfahrensschritt eine Lichtleitfaser ergibt, die einen Kern (4) von praktisch kreisförmigem Querschnitt und zugleich eine Hülle (5) von elliptischem Querschnitt aufweist.

2. Verfahren nach Anspruch 1, dadurch gekennzeichnet, daß der Überdruck erzeugt wird, indem ein Gas in das Innere des Rohrs eingeführt wird und indem der Gasdurchsatz zur Regelung der Amplitude des Überdrucks kontrolliert wird.

3. Verfahren nach Anspruch 2, dadurch gekennzeichnet, daß für das Gas Sauerstoff verwendet wird.

4. Verfahren nach einem beliebigen der Ansprüche 2 bis 3, dadurch gekennzeichnet, daß vor dem Schrumpfen ein zusätzlicher Verfahrensschritt eingefügt wird, während dem eines der Enden des Rohrs (1) verschlossen ist, wobei das Gas durch das andere Ende eingespeist wird.

5. Verfahren nach einem beliebigen der Ansprüche 1 bis 4, dadurch gekennzeichnet, daß der Überdruck 100 Pa beträgt.

6. Verfahren nach Anspruch 5, dadurch gekennzeichnet, daß die Dickenunterschiede der Oxidschicht erzielt werden, indem die Bereiche der Innenseiten der Wandung des Rohrs (1) auf unterschiedliche Temperaturen erwärmt werden, wobei die der großen Achse der Ellipse nahen Bereiche auf eine höhere Temperatur gebracht werden als die übrigen Bereiche.

## Claims

1. A method for manufacturing an optical monomode fibre allowing to conserve the linear polarisation of a light wave guided through this optical fibre, the method comprising
-a first step in which oxides are deposited inside a rotating quartz tube (1) of elliptical inner cross-section, along which a heat source (2) is displaced and to which halides and oxygen are fed, in order to obtain an oxide layer which is thicker on the tube (1) surface in zones close to the major ellipse axis of said elliptical cross-section than in other zones, the tube being heated up to a first temperature by said heat source, this step including two phases, a first phase in which the sheath material is deposited and a second phase in which the core material is deposited,
-a second step in which the tube (1) is contracted by increasing the temperature of the tube (1) due to the heat source (2) until a bar or preform is obtained,
-a third step in which this preform is drawn to obtain a fibre of identical dimensional ratios as that of the preform, including a central core zone (6) and at least one peripheral sheath zone (5) of different doping rates, characterized in that during the contraction operation of the second step, an overpressure is created inside the tube (1) with respect to the ambient pressure existing outside the tube (1), in order to obtain at the end of the third step an optical fibre having a core (4) of substantially circular cross-section and, simultaneously, a sheath of elliptical cross-section.

2. A method according to claim 1, characterized in that the overpressure is obtained by feeding a gas into the tube and by controlling the gas flow rate for adjusting the overpressure amplitude.

3. A method according to claim 2, characterized in that the gas is oxygen.

4. A method according to any one of claims 2 to 3, characterized in that it includes an additional step prior to the contraction during which one of the ends of the tube (1) is closed, the gas being fed through the other end.

5. A method according to any one of claims 1 to 4, characterized in that the overpressure is equal to 100 Pa.

6. A method according to claim 5, characterized in that the thickness variations of the oxide layer are obtained by heating the zones close to the major ellipse axis up to a higher temperature than that of the other zones.
